**Europäisches Patentamt**

**European Patent Office**

**Office européen des brevets**

(19)

(11) Publication number: **0 018 079**
**A1**

## EUROPEAN PATENT APPLICATION

(12)

(21) Application number: 80300767.3

(22) Date of filing: 12.03.80

(51) Int. Cl.³: **G 01 N 29/00, G 01 N 29/04, G 03 H 3/00**

(30) Priority: 12.03.79 JP 27721/79

(43) Date of publication of application: 29.10.80
**Bulletin 80/22**

(84) Designated Contracting States: **DE FR GB**

(71) Applicant: **Hitachi, Ltd., 5-1, Marunouchi 1-chome, Chiyoda-ku Tokyo 100 (JP)**

(72) Inventor: **Takahashi, Fuminobu, 3-14 Higashitaga, Hitachi Ibaraki (JP)**
Inventor: **Suzuki, Kazumichi, 2067-54, Senba, Mito Ibaraki (JP)**

(74) Representative: **Ellis, Edward Lovell et al, MEWBURN ELLIS & CO. 70-72, Chancery Lane, London, WC2A 1AD (GB)**

(54) **Digital type ultrasonic holographic apparatus.**

(57) A digital type ultrasonic holograph apparatus is provided utilizing a clock pulse generator (12) having a predetermined periodicity, a trigger pulse generator (14) driving a spike pulse generator (15) for producing an ultrasonic pulse beam which is directed by means of a probe (1) on to an object for measurement in synchronism with said clock pulse, a waveform shaping circuit (18) for converting reflected ultrasonic pulse beams from said object for measurement into digital pulses, a time coincidence signal detector (13) for detecting time coincidence between said clock pulse and said digital pulses contained in a predetermined gate period and producing as an output a coincidence signal when they coincide with each other, a scanner (11) for moving an ultrasonic generating and receiving probe (1) to a desired position, and a display device (19) for displaying the hologram of said object for measurement using said coincidence signal as a luminance signal and a position signal of said ultrasonic generating and receiving probe (1) as a deflection signal of said luminance signal. Using this holography apparatus a hologram of said object for measurement is displayed in a fringe pattern and the position and shape of said object for measurement are measured from those of the fringe pattern.

0018079

DIGITAL TYPE ULTRASONIC HOLOGRAPHIC APPARATUS

The present invention relates to an ultrasonic holographic apparatus for detecting the sizes, shapes and positions of foreign matters present in an object by means of a digital type ultrasonic hologram, and more specifically to an ultrasonic holographic apparatus which is useful for detecting the presence of cracks in such objects as the piping installation of a nuclear reactor.

Examples for probing cracks in the metals are mentioned below. According to the conventional ultrasonic holographic apparatus, transmitted ultrasonic pulses of sinusoidal waveforms are radiated from a probe onto an object that may contain cracks, reflected waves (hereinafter referred to as object modified waves) reflected by the cracks present in the object being examined are received, the thus received waves are permitted to interfere with respect to a reference wave having a predetermined phase difference relative to the transmitted waves, and the amplification of the resulting interferance waves is luminance-modified to prepare an ultrasonic hologram of the cracks. With the above conventional apparatus, electric signals of sinusoidal waves are used as reception waves and reference waves, and the phase difference between the transmitted wave and the reference wave is controlled by an analog electric circuit. Furthermore, the amplitude of the interference waves is obtained by the multiplication of the transmitted signals and the reference wave signals.

Ultrasonic holographic apparatus which employs such analog signals has the following defects.

(1) The reflected signals must have a width of from several microseconds to several tens of microseconds so that they are interfered by the reference signals.

(2) A large oscillator and a large power amplifier are required in order to transmit pulses of sinusoidal wave form from the probe.

(3) Limitation is imposed on the distance of interference fringes of the hologram which is obtained depending upon the ultrasonic frequency being employed.

In order to eliminate the above-mentioned defects, a digital type ultrasonic holographic flaw detector has been proposed in our British Patent Application No. 27,559/78 published under Serial No. 2,000,291.

According to the digital type ultrasonic holographic flaw detector disclosed in British Specification No. 2,000,291, clock pulses are produced after an interval of a predetermined period, ultrasonic pulses are generated in synchronism with pulses which are produced by dividing the frequency of the clock pulses, coincidence in time between the reflected signals in the ultrasonic pulses received during a predetermined gate period and the clock pulses is examined, and coincidence pulses are produced when they are in agreement in order to prepare a hologram by the coincidence pulses, so that the state of cracks can be detected from the positions and shapes of the thus prepared hologram of a fringed pattern.

It is an object of the present invention to provide an ultrasonic holographic apparatus which is free from the defects referred to above, and which is more simply constructed than the known apparatus.

According to the present invention there is provided an ultrasonic holographic apparatus for detecting the sizes, shapes and positions of foreign matters present in an object (5) by means of a digital type ultrasonic hologram, said apparatus having a probe (1); a scanner (11) for moving the probe in relation to the object; a scan controller (10) for controlling the movement of the scanner; spike pulse generation means (14,15) for initiating the transmission of ultrasonic trigger pulses from said probe; amplifier means (17) for receiving the reflected ultrasonic signals from the object; a clock pulse generator (12) for generating clock pulses maintaining a predetermined time interval; signal detection means (13) for detecting coincidence between reflected signals and clock pulses; and a display means (19); characterized in that means (18) are provided for generating a gating signal delayed in relation to an ultrasonic trigger pulse; and in that means (463) are provided within the signal detection means for counting the clock pulses from an instant when the ultrasonic pulses are transmitted from the probe to the instant when a selected reflected signal is received within said predetermined gating signal, in order to produce the counted value in a divide-by-$n$ manner, wherein $n$ is a positive integer, wherein the output from the counting means is displayed on the display means.

Thus instead of using time coincidence detection means as disclosed in British Specification No. 2,000,291, a binary counter is preferably provided to count the reference signals from a predetermined instant until object modified signals are received.

The present invention will now be described in greater detail by way of example with reference to the accompanying drawings, wherein:-

Fig. 1 is a diagram for illustrating the principle of an ultrasonic holographic method, in which the surface of an object being examined is in parallel with the scanning lines of a probe.

Fig. 2 is a graph showing the relationship between the amplitude of interference fringes and the scanning position, which is obtained under the flaw detecting conditions of Figure 1.

Fig. 3 is a diagram which illustrates the principle of the ultrasonic holographic method, in which the surface of the object being examined is tilted with respect to the scanning axis of the probe.

Fig. 4 is a graph showing the relationship between the amplitude of interference fringes and the scanning position, which is obtained under the flaw detecting conditions of Fig. 3.

Fig. 5 is a block circuit diagram illustrating a first preferred form of a digital type ultrasonic holographic apparatus.

Fig. 6 is a block circuit diagram showing an example of the clock pulse generator circuit 12 of Fig. 5.

Fig. 7 is a waveform diagram showing signals of the circuits of Fig. 5.

Fig. 8 is a block circuit diagram showing an example of the trigger pulse generator circuit 14 of Fig. 5.

Fig. 9 is a waveform diagram showing signals of the circuit of Fig. 8.

Fig. 10 is a circuit diagram showing an example of the wave-form shaping circuit 18 of Fig. 5.

Fig. 11 is a waveform diagram showing the signals of the circuit of Fig. 10.

Figs. 12 and 13 are circuit diagrams showing an example of a hologram signal detector circuit 13 of Fig. 5.

Fig. 14 is a waveform diagram showing the signals of the circuits of Fig. 13.

Fig. 15 is a block circuit diagram of a second embodiment of an ultrasonic holographic apparatus; and

Fig. 16 is a block circuit diagram showing an example of the sectional coordinates arithmetic unit 20 of Fig. 5.

The principle of the present invention is discussed below in comparison with the principle of the conventional analog type ultrasonic holographic apparatus.

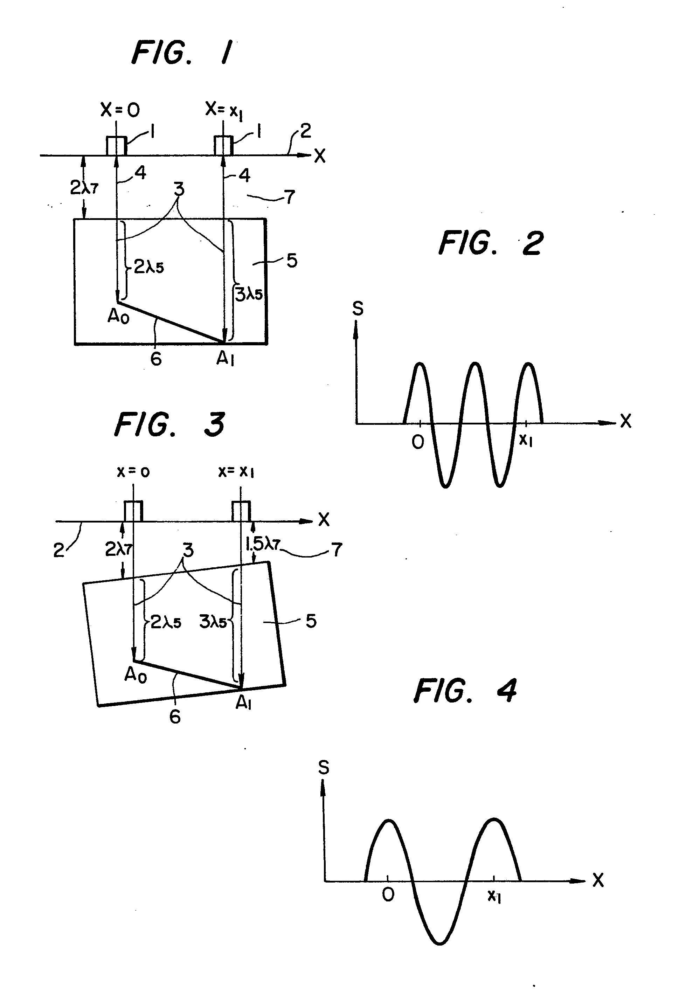

Figs. 1 to 4 are diagrams illustrating the principles of a conventional apparatus and the apparatus of the present invention when the waves reflected by the cracks in the object being examined are observed using a probe having a resonance frequency of 1 MHz.

0018079

Fig. 1 shows the case when the surface of the object being examined is in parallel with the scanning lines of the probe. In this case, the distance between the probe 1 and the surface of an object 5 being examined is twice that of an ultrasonic wave length $\lambda_7$ which travels in a medium 7. The probe 1 scans along a scanning line 2. When the probe 1 is located at an origin $X = 0$ and at a position $X = x_1$ on the scanning line 2, an ultrasonic beam 3 emitted from the probe 1 is reflected by points $A_0$ and $A_1$ of a crack 6 and enters into the probe 1. In this case, let it be assumed that distances of waves which propagate through the object 5 being reflected by the points $A_0$ and $A_1$ are 4 times and 6 times that of the ultrasonic wave length $\lambda_5$ in the object 5 being examined. A reference wave 4 enters into the probe 1 at an angle of $0^o$.

When the flaw as shown in Fig. 1 is to be detected by the conventional holographic apparatus, the reflected wave and the reference wave are in phase at the points $A_0$ and $A_1$, whereby the amplitudes of interference waves become maximum at the scanning positions $X = 0$ and $X = x_1$, making it possible to display interference fringes. In other words if the scanning position X is represented by the abscissa and the amplitude S of interference waves is represented by the ordinate, signals of a waveform as shown in Fig. 2 are obtained. The scanning is effected by the probe 1 from $X = 0$ to $X = x_1$ while displaying the interference fringes when the amplitude S of the interference waves if of a positive value, and an ultrasonic hologram of the crack 6 consisting of three interference fringes is displayed. In
this case, the interference fringe is exhibited for each
change of the propagation distance of ultrasonic waves by
a quantity equal to the ultrasonic wave length $\lambda_5$, the ultra-
sonic waves being transmitted from the probe 1, reflected
by the surface of the crack 6 and returning again to the
probe 1. Therefore, the interference fringes of the
ultrasonic hologram of the crack 6 correspond to contour
lines (the distance between the contour lines is one-half
of the ultrasonic wave length $\lambda_5$) in the direction of depth
of the object 5 being examined. From the number of
interference fringes, therefore, it is found that the
depth of crack 6 from the point $A_0$ to the point $A_1$ is $\lambda_5$.

When the flaw is to be examined in the manner shown
in Fig. 3, the distance between the surface of the object 5
being examined and the probe 1 is $2\lambda_7$ at the scanning
position $X = 0$ and $1.5\lambda_7$ at the scanning position $X = x_1$.
Further, the surface of the object 5 being examined is
tilted with respect to the scanning line 2. In this case,
the relation between the amplitude S of the interference
waves and the scanning position X is as shown in Fig. 4.
The ordinate and abscissa of Fig. 4 have the same meaning
as the ordinate and abscissa of Fig. 2. As will be obvious
from Fig. 4, when the surface of the object 5 being examined
is tilted relative to the scanning line 2, the interference
fringes in the ultrasonic hologram of the crack 6 do not
represent contour lines in the direction of depth of the
object 5 being examined. Therefore, it becomes difficult to
find the distribution of the depth of cracks by simply relying

0018079

upon the number of interference fringes.

The principle on which the present invention is based is as follows. When the flaws or crack are to be detected as shown in Fig. 1, the number of clock pulses is counted from the instant the ultrasonic pulses are transmitted to the instant the reflected waves are received. In this case, at the scanning position $X = 0$, the propagation time of ultrasonic waves if $(2\lambda_7/V_7 + 4\lambda_5/V_5)$ second, and at the scanning position $X = x_1$, the propagation time is $(2\lambda_7/V_7 + 6\lambda_5/V_5)$ second. Symbols $v_7$ and $v_5$ denote propagation speeds of ultrasonic waves in the medium 7 and in the object 5. If the clock pulses of a period T are counted according to the binary notation, the counted values at the scanning positions $X = 0$ and $X = x_1$ will be $(4\lambda_7/V_7 + 4\lambda_5/V_5)/T$ and $(4\lambda_7/V_7 + 6\lambda_5/V_5)/T$, respectively. In order for the bit 1 which is a second bit as counted from the minimum bit in the above counted values to assume values 1, 0, 1, 0, 1 while the scanning position changes from $X = 0$ to $X = x_1$, the period of the clock pulses should be selected to be $T = \lambda_5/2v_5$. Likewise, if clock pulses of a period $T = (\lambda_5/v_5)/8$ are used, the value of bit 3 which is a fourth bit as counted from the smallest bit in the counted values of clock pulses, changes in a manner of 1, 0, 1, 0, 1 while the scanning position changes from $X = 0$ to $X = x_1$. By utilizing the values 0, 1 of bits of clock pulses which are counted according to the binary notation, it is possible to prepare an ultrasonic hologram of the crack 6.

When the cracks are to be detected under the conditions as shown in Fig. 3, the clock pulses of a period $T = \lambda_5/2v_5$ are counted from the instant when the wave reflected by the surface of the object 5 to be examined is received to the instant when the waves reflected by the crack 6 are received. The binary counted values at the scanning positions $X = 0$ and $X = x_1$ are $(4\lambda_5/v_5)/T$ and $(6\lambda_5/v_5)/T$, respectively. The values of bit 1 which is the second bit as counted from the minimum bit in the binary counted values changes in a manner of 1, 0, 1, 0, 1 as the scanning position changes from $X = 0$ to $X = x_1$. If the interference fringes are displayed when the value is 1, an ultrasonic hologram consisting of three interference fringes can be prepared. The ultrasonic hologram is substantially the same as the hologram obtained under the flaw detacting conditions of Fig. 1.

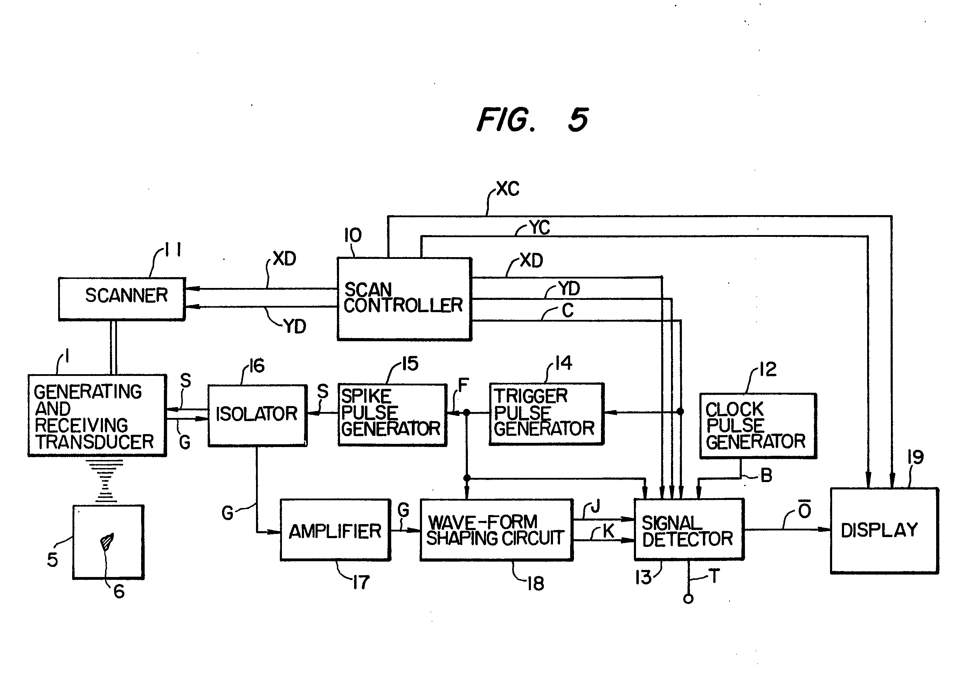

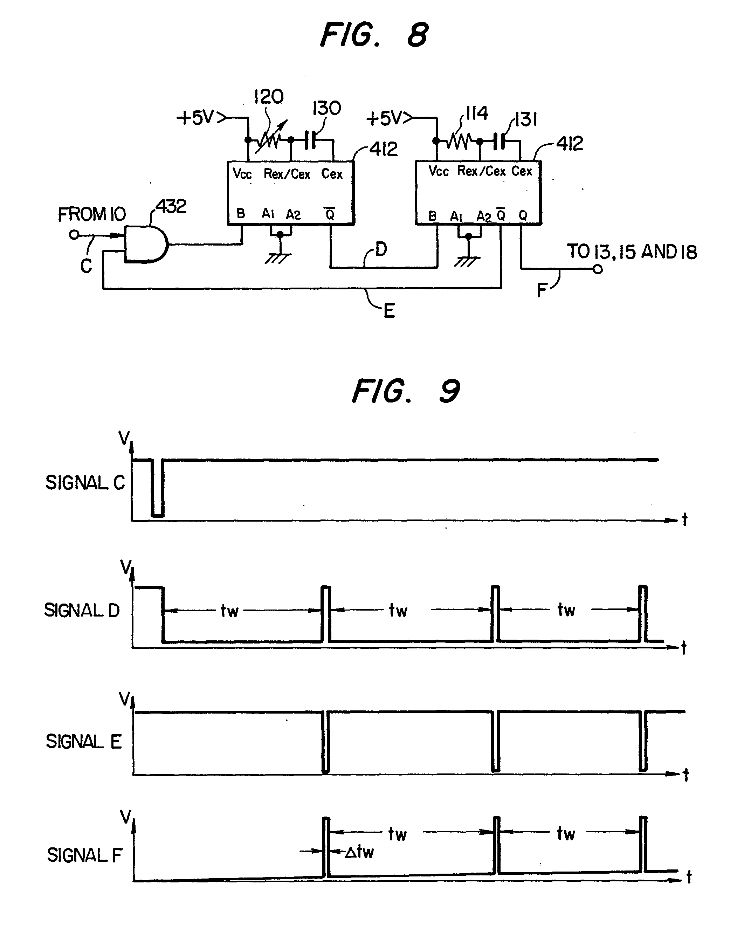

Referring to Fig. 5, the ultrasonic holographic apparatus is applied to a pulse-echo system in which the transmission and reception of ultrasonic waves are performed by a probe 1. The probe 1 effects the scanning along a scanning path 2 on a plane X-Y being driven by a scanner 11. A scan controller 10 produces X-drive pulses XD and Y-drive pulses YD to control the scanner 11, and further sends and X-coordinate signal XC and a Y-coordinate signal YC to a display 19 to indicate the position of the probe 1. Further, the scan controller 10 feeds a **reset** signal C (Fig. 9) to a hologram signal detector 13 and to a trigger pulse generator 14.

A clock pulse generator 12 produces clock pulses B (Fig. 7) of N Hz which are supplied to the hologram signal detector 13.

The trigger pulse generator 14 generates trigger pulses F (Fig. 9) of a narrow width maintaining a predetermined interval of time, which are fed to a spike pulse generator 15, to a waveform shaping circuit 18 and to the signal detector 13.

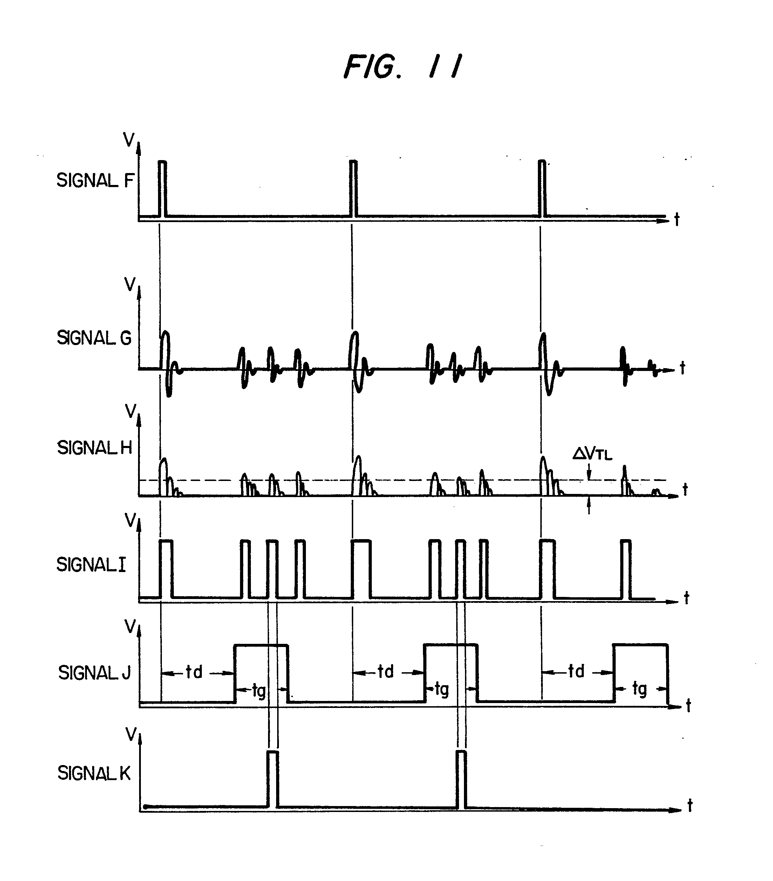

The spike pulse generator 15 generates spike pulses in synchronism with the trigger pulses F from the trigger pulse generator 14. An isolator 16 feeds high-voltage spike pulses S from the generator 15 to the probe 1, and also feeds reflected wave signals F (Fig. 11) to an amplifier 17, the reflected wave signals G being reflected by the front surface and back surface of the object 5 that is to be examined and reflected by the cracks 6, and further being received by the probe 1.

The amplifier 17 amplifies the reflected wave signals G from the probe 1 and feeds them to the waveform shaping circuit 18.

The waveform shaping circuit 18 detects the signals amplified by the amplifier 17 and converts the signals having voltages which are greater than a predetermined level into pulses in digital notation. The waveform shaping circuit 18 further extracts only those digital pulses that are produced within a predetermined period of time after the trigger pulses have been produced, and further extracts as n-th digital pulse K (Fig. 11) only, and feeds them to the hologram signal detector 13 together with the

0018079

gate pulses J (Fig. 11).

The hologram signal detector 13 counts the number of clock pulses produced by the clock pulse generator from an instant when the trigger pulse F from the trigger pulse generator 14 is received, i.e., from an instant when the ultrasonic wave pulse is transmitted to an instant when a pulse from the waveform shaping circuit 18 is received, and feeds the value of an i-th ($i$ is a positive integer) bit which serves as a hologram signal to the display 19. In the case where no pulse is received within a period in which a gate pulse is being produced i.e., when no wave is reflected by the crack 6, the i-th bit has a value "0".

The display 19 uses the X- and Y-coordinate signals fed from the scan controller 10 as deflection signals and hologram signals from the hologram signal detector 13 as luminance signals, thereby to display a hologram of the crack 6. Although the display employed is a generally used display of cathode-ray tube, it may also be a display of liquid crystals.

The circuits and their operation of some of the clocks shown in Fig. 5 will now be described in greater detail. The remaining blocks are similar to those used in conventional analog type ultrasonic holographic apparatus.

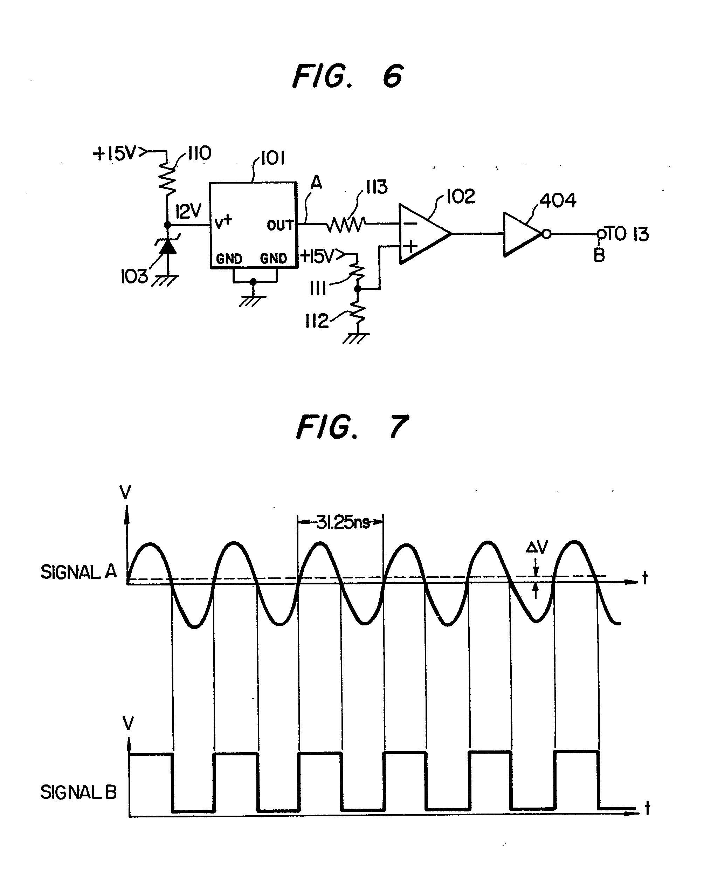

Fig. 6 is a circuit diagram of the clock pulse generator 12, which comprises a quartz oscillator 101 which oscillates at 32 MHz, a comparator 102, an inverter 404, a zener diode 103 rated at 12 volts, and resistors 110, 111, 112, and 113. Fig. 7 is a waveform of signals A and B of Fig. 6. As shown in Fig. 7, the clock pulse generator 12 produces clock pulses B of 31.25 MHz.

The sinusoidal signals A of Fig. 7 are produced by the quartz oscillator 101, and have a frequency of 31.25 MHz. Clock pulses B are converted from the signals A in a digital manner, and acquire a TTL level "1" only when the signals A have exceeded a level $\Delta V$ (indicated by a dotted line in Fig. 7).

The trigger pulse generator 14 of Fig. 5 is shown in greater detail in Fig. 8. The generator comprises two monostable multi-vibrators 412, an AND gate 432, a resistor 114, capacitors 130 and 131, and a variable resistor 120.

Referring to Fig. 9, the signal C represents a reset pulse from the scan controller 10 (Fig. 5). The trigger pulse generator 14 initiates the operation after the reset pulse C has been received. Signals D and E are produced by the monostable multi-vibrators 412 of the first and second stages, and signals F serve as trigger pulses. A repetative period $t_w$ of trigger pulses is determined by the time constant of the circuit comprising the variable resistor 120 and the capacitor 130. The pulse width $\Delta t_w$ is determined by the time constant of the circuit comprising the resistor 114 and the capacitor 131.

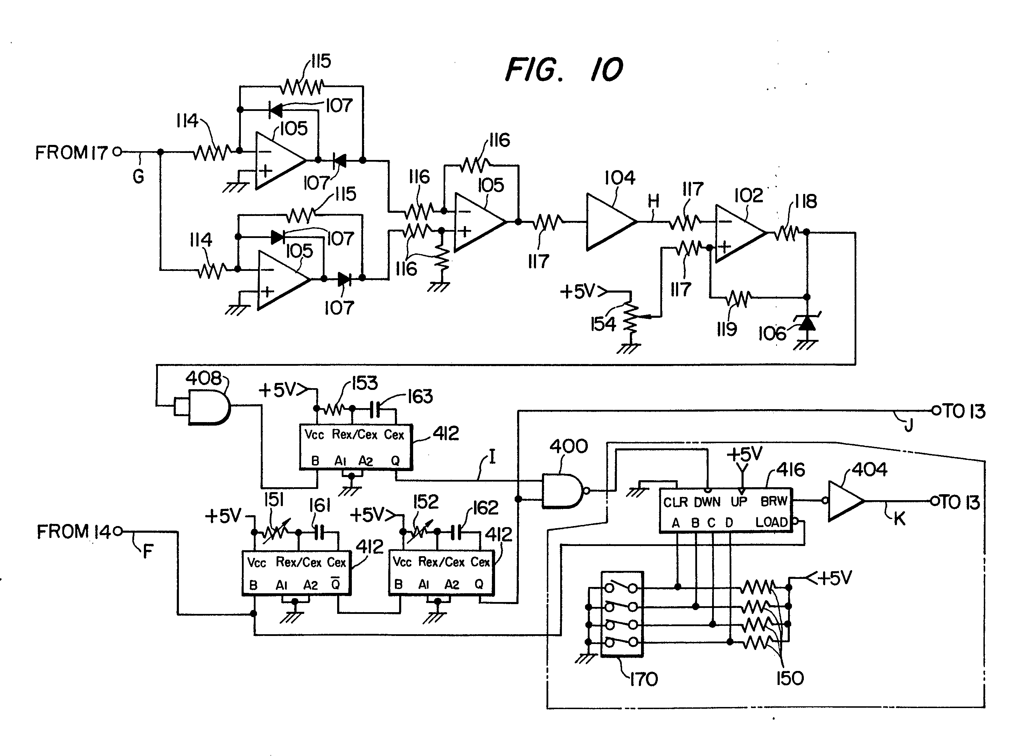

The waveform shaping circuit 18 of Fig. 5 is shown in greater detail in Fig. 10. The circuit comprises resistors 114 to 119, 150 and 153, zener diodes 106 and 107, an operation amplifier 105, a buffer amplifier 104, a comparator 102, monostable multivibrators 412, a 4-bit
up-down counter 416, a NAND gate 400, an inverter 404
and an AND gate 408, capacitors 161, 162 and 163,
variable resistors 151, 152 and 154 and a switch 170.

Referring to Fig. 11, signals F are trigger pulses
produced by the trigger pulse generator 14 (Fig. 5).  The
waveform shaping circuit 18 produces gate  pulses of a
width $t_g$, which lag behind the trigger pulses F by $t_d$.
The delay time $t_d$ and the pulse width $t_g$ are determined
by the time constant of the circuit comprising the
variable resistor 151 and the capacitor 161 and by the
time constant of the circuit comprising the variable
resistor 152 and the capacitor 162.  Signals G are the
reflected signals.  The signals G are rectified and converted into signals H by the waveform shaping circuit 18.
Then, the signals H which exceed a level indicated by the
dotted line in Fig. 11 are digitally converted into pulses
to prepare signals I.  The level indicated by the dotted
line can be set by the variable resistor 154 of Fig. 10.
Digital pulses are extracted from the signals I within the
periods in which the gate pulse signals J are being
produced.  Further, due to the presence of the switch 170
shown in Fig. 10, pulses which are received in the second
place only are produced as received pulses K.

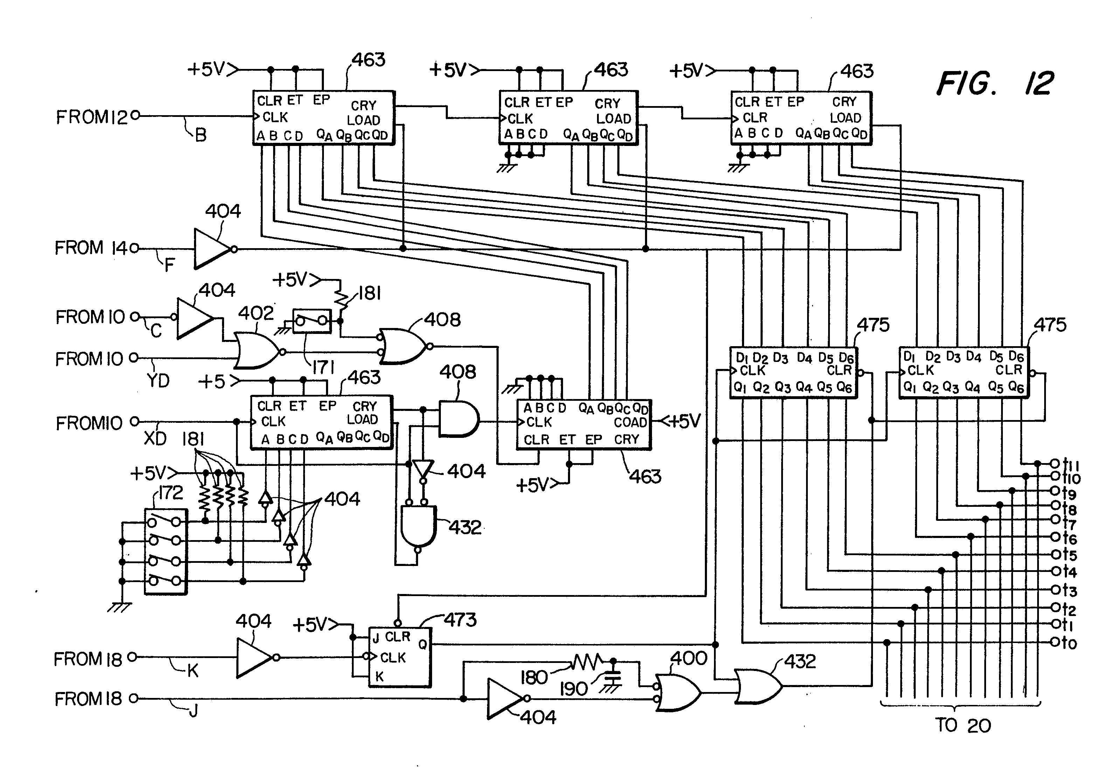

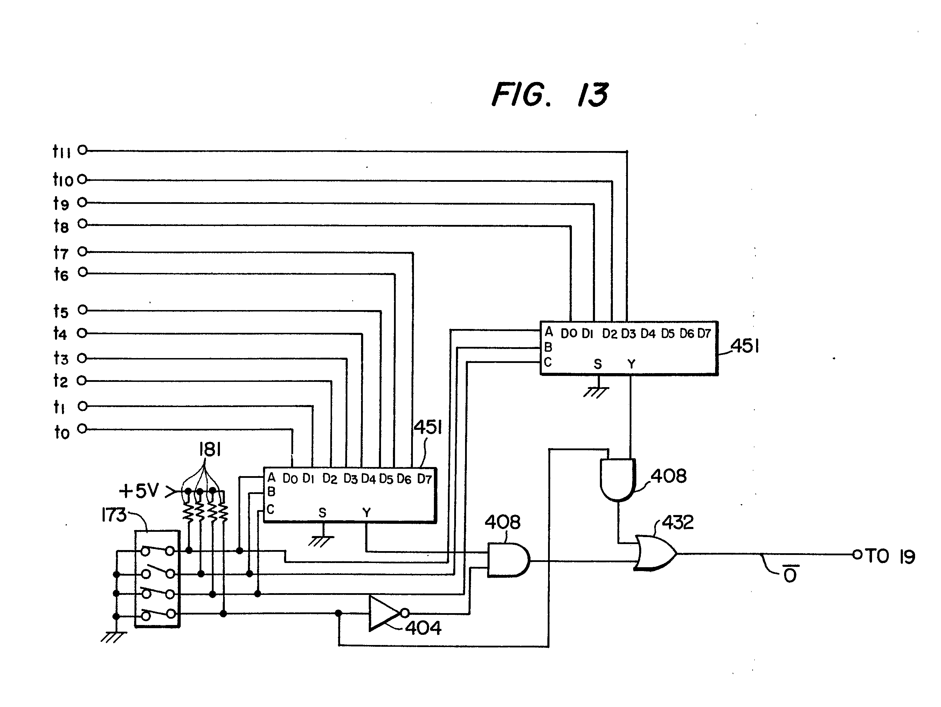

The hologram signal detector 13 of Fig. 5 is shown
in greater detail in Figs. 12 and 13.  The detector comprises
resistors 180 and 181, a capacitor 190, a NAND gate 400,
a NOR gate 402, an inverter 404, an AND gate 408, an OR gate 432, a J-K flip-flop 473, hexa-edge trigger flip-flops 475, 4-bit binary counters 463, 3-bit data selectors 451, and switches 171, 172 and 173.

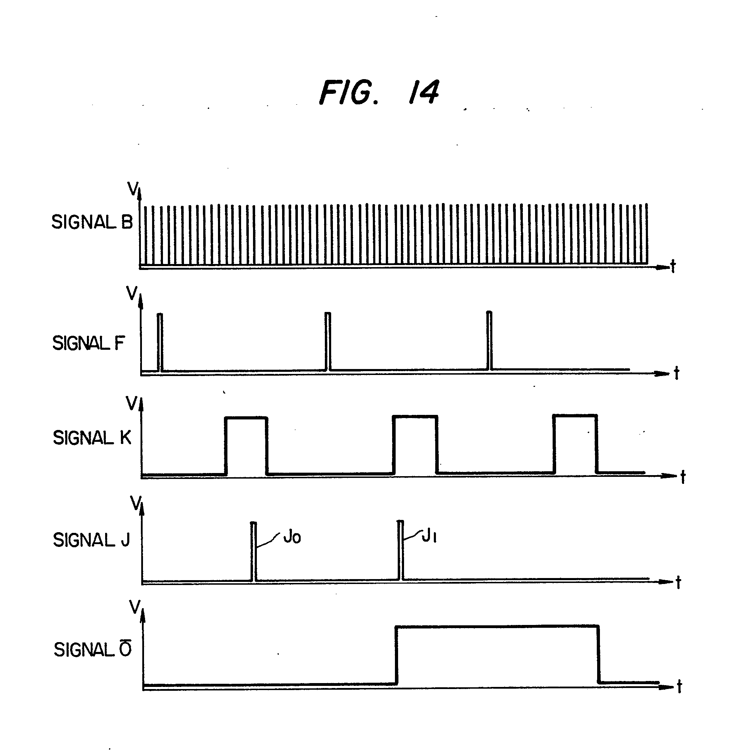

Referring to Fig. 14, signals B are clock pulses produced by the clock pulse generator 12 (Fig. 5), signals F are trigger pulses produced by the trigger pulse generator 14, and signals K and J are gate pulses and received signals produced by the waveform shaping circuit 18. The counted value of clock pulses at $J_0$ is indicated at 1101, and the counted value of clock pulses at $J_1$ is indicated as 1011 in the binary notation. With the switch 173 being set as shown in Fig. 13, the second bit from the smallest side in the counted value is produced as a hologram signal. Therefore, the hologram signal O is "0" at the received pulse $J_0$ and "1" at the received pulse $J_1$. The level "1" is maintained until the gate pulse K breaks when there is no received pulse, or until the second bit from the smallest side in the counted value is "0" when there is a received pulse.

When the switch 171 is opened in Fig. 12, a frequency-divided counted value of X-drive pulses XD in counting the clock pulses B is stored in the counter when the operation for counting the clock pulses is initiated. Therefore, the instant when the ultrasonic wave pulse is transmitted and the instant when the operation for counting the clock pulses is started, deviate in proporation to the scanning position X. This operation makes it possible to realize the flaw detection, which is substantially similar to the case when the reference waves are tilted using the conventional ultrasonic holographic flaw detector, i.e., which is substantially similar to the holographic flaw detection of the Leith type.

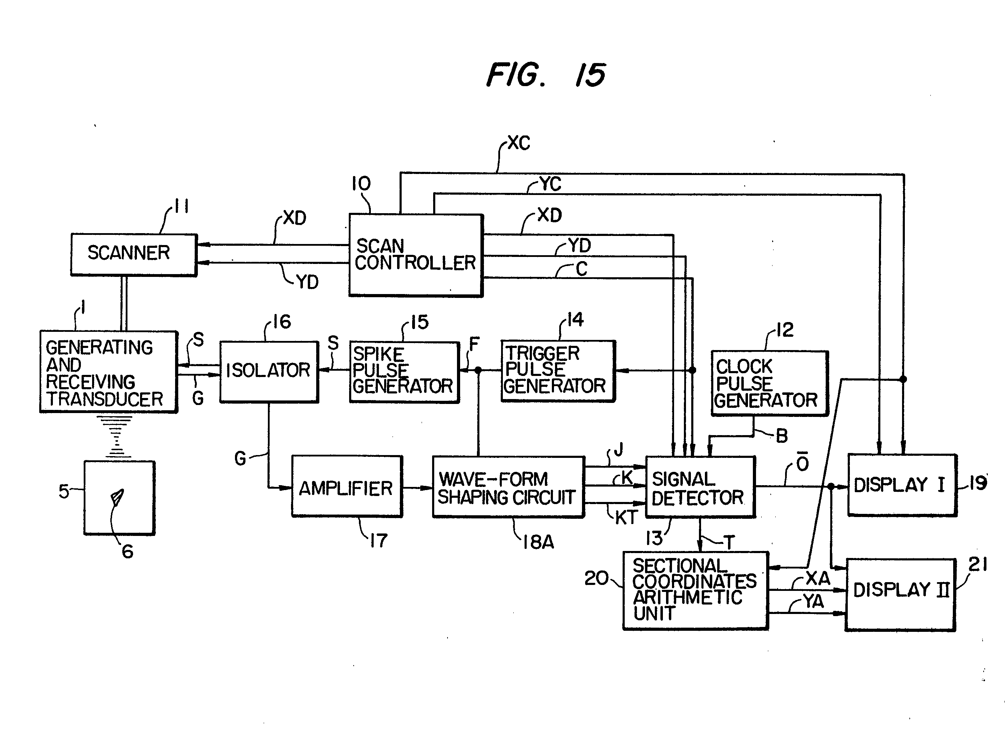

Referring now to the second embodiment as applied to the flaw detector, which is shown in Fig. 15, an alternative circuit section to the waveform shaping circuit 18 of Fig. 10, as surrounded by a dotted line, is provided. In this case, a received pulse produced with the switch 170 being set to a small value, is fed as a trigger pulse KT to the hologram signal detector 13A.

The hologram detector 13 is constructed in the same manner as the circuit shown in Fig. 12. In this case, however, the above-mentioned trigger pulse KT is employed instead of the trigger pulse F produced by the trigger pulse generator 14 (Fig. 5).

A sectional coordinates arithmetic unit 20 calculates sectional coordinates of the object 5 in accordance with the number of clock pulses counted by the hologram signal detector 13A and X-coordinate signals XC from the scan controller 10, to produce a signal which indicates the position of the reflecting body (such as crack 6, front and back surfaces of the object 5).

A display 21 displays a cross-sectional image of the object 5 relying upon the signals from the sectional coordinates arithmetic unit 20, which work as X-deflection signals and Y-deflection signals, and relying upon the hologram signals from the hologram signal detector 13, which work as luminance signals. The display 21 which displays a cross-sectional image is constructed substantially the same as the display 19.

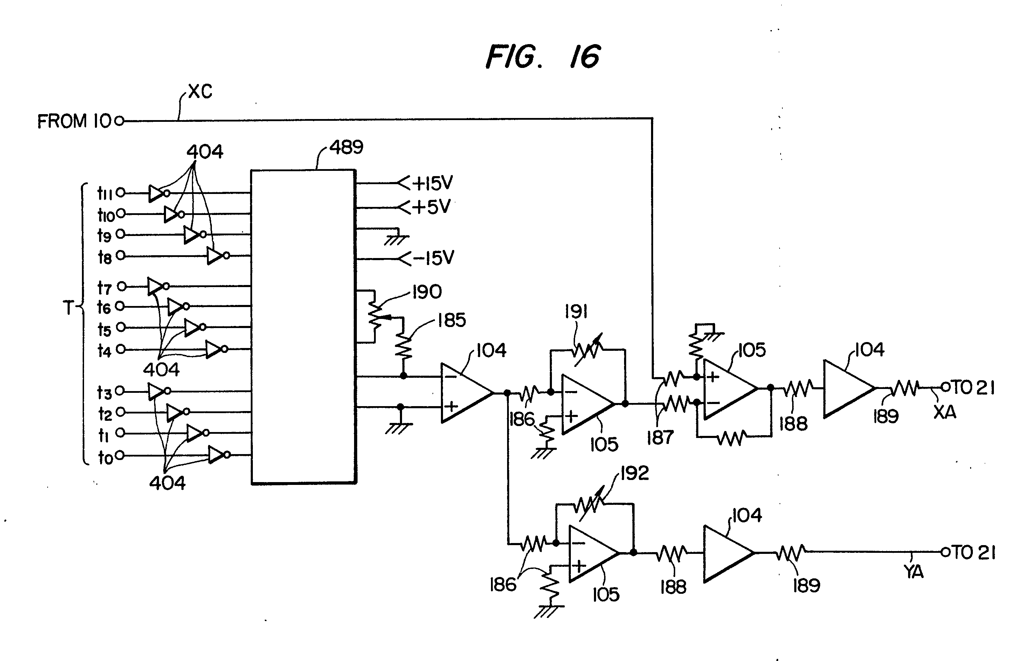

The sectional coordinates arithmetic unit 20 is shown in greater detail in Fig. 16. The circuit comprises a digital-to-analog converter 489, a buffer amplifier 104 and an operational amplifier 105, inverters 404, variable resistors 190, 191 and 192 and resistors 185, 186, 187, 188 and 189. Referring to the circuit of Fig. 15, a signal T which represents the number of clock pulses from the hologram signal detector 13 is converted into an analog value $A_t$ by the digital-to-analog converter to prepare X-deflection and Y-deflection signals for displaying the cross-sectional image according to the following equations, and the thus prepared signals are fed to the display 21 which displays the cross-sectional image.

$$X_A = A_t/2v \sin \theta + X_{AO} \quad \ldots\ldots\ldots\ldots\ldots\ldots (1)$$
$$Y_A = -A_t/2v \cos \theta \quad \ldots\ldots\ldots\ldots\ldots\ldots (2)$$

In the above equations, symbol $X_{AO}$ represents a voltage of an X-coordinate signal from the scan controller 10, $v$ represents the speed of sound, and $\theta$ represents an incident angle of the ultrasonic waves which fall on the object 5 being examined. The values of $1/2v \sin \theta$ and $1/2v \cos \theta$ can be set by the variable resistors 191 and 192.

The display 21 displays the cross-sectional image of the object 5 being examined relying upon the voltages XA and YA which are obtained according to the above-mentioned equations and which serve as coordinate-deflection signals, and relying upon the hologram signals 0 from the hologram signal detector 13, which serve as luminance signals.

0018079

The following advantageous effects arise from the first embodiment described above.

(a) The interference gaps on the hologram can be controlled irrespective of the frequency of the ultrasonic waves being employed, so as to increase the resolving power, as required. For example, the switch 173 of Fig. 13 may be set to a small value in order to prepare a detailed hologram having small interference gaps.

The following advantageous effects additionally arise from the second embodiment described in Figs. 15 and 16.

(b) An ultrasonic hologram of cracks can be prepared without being affected by the uneven surfaces of the object being examined. Referring to Fig. 12, for example, if reception pulses by the waves reflected by the surfaces of the object are used instead of trigger pulses, an accurate hologram of cracks can be displayed without being affected by uneven surfaces of the object that is to be examined.

(c) Use of a counted value of clock pulses makes it possible to display the cross-sectional image simultaneously with the display of the hologram.

CLAIMS:-

1.   An ultrasonic holographic apparatus for detecting
the sizes, shapes and positions of foreign matters present
in an object (5) by means of a digital type ultrasonic
hologram, said apparatus having a probe (1); a scanner (11)
for moving the probe in relation to the object; a scan
controller (10) for controlling the movement of the scanner;
spike pulse generation means (14,15) for initiating the
transmission of ultrasonic trigger pulses from said probe;
amplifier means (17) for receiving the reflected ultrasonic
signals from the object; a clock pulse generator (12) for
generating clock pulses maintaining a predetermined time
interval; signal detection means (13) for detecting
coincidence between reflected signals and clock pulses; and
a display means (19); characterized in that means (18) are
provided for generating a gating signal delayed in relation
to an ultrasonic trigger pulse; and in that means (463)
are provided within the signal detection means for counting
the clock pulses from an instant when the ultrasonic pulses
are transmitted from the probe to the instant when a selected
reflected signal is received within said predetermined
gating signal, in order to produce the counted value in
a divide-by-$\underline{n}$ manner, wherein $\underline{n}$ is a positive integer,
wherein the output from the counting means is displayed
on the display means.

2.   An ultrasonic holographic apparatus according
to claim 1, wherein said received reflected signals are
rectified and squared in circuit means (104,102) before being applied to said gating means.

3. An ultrasonic holographic apparatus according to claim 2, wherein means (154) are provided so that only those reflected signals above a predetermined level are rectified and squared.

4. An ultrasonic holographic apparatus according to any one of the preceding claims, wherein said gating signal is generated by a pair of monostable circuits (412) having elements (151, 161, 152, 162) enabling the setting of the leading and trailing edges of the gating pulse (J) in relation to a spike pulse (F) for transmission to the probe.

5. An ultrasonic holographic apparatus according to any one of the preceding claims, wherein an up-down counter (416) is provided for generating a single pulse (K) from a plurality received within said gating period, said signal corresponding to said selected reflected signal at which the counting operation is stopped.

6. An ultrasonic holographic apparatus according to claim 5, wherein switch means (170) is provided for selecting the i-th reflected pulse received during said gating signal (J), where $i$ is a positive integer.

7. An ultrasonic holographic apparatus according to any one of the preceding claims, wherein said counting means comprises a plurality of binary counters (463), a pair of flip-flops (475) and a pair of data selectors (451) arranged to provide a coincidence output between a clock pulse signal and said selected reflected signal received within the gating signal.

8. An ultrasonic holographic apparatus according to any one of the preceding claims, characterized in that it additionally includes an arithmetic unit and a second display means (21), the first display means (19) displaying an image of the object (5) being examined, whilst the second display means (21) displays a cross-sectional image of the object.

9. An ultrasonic holographic apparatus according to claim 8, wherein said arithmetic unit comprises a digital-to-analog converter (489) buffer amplifiers (105) and operational amplifiers (104), said arithmetic unit calculating sectional coordinates of the object in accordance with the number of clock pulses counted by the signal detection means (13) and X-coordinate signals from the scan controller (10), to produce a signal which indicates the position of a foreign body on the object.

## FIG. 1

X = 0    X = $x_1$

2$\lambda$7

2$\lambda$5    3$\lambda$5

$A_0$    $A_1$

6

5

7

4    4

3

2    1    1

## FIG. 2

S

O    $x_1$    X

## FIG. 3

x = 0    x = $x_1$

2    X

2$\lambda$7    1.5$\lambda$7    7

3

2$\lambda$5    3$\lambda$5    5

$A_0$    $A_1$

6

## FIG. 4

S

O    $x_1$    X

FIG. 5

## FIG. 6

## FIG. 7

## FIG. 8

## FIG. 9

FIG. 10

# FIG. 11

FIG. 12

FIG. 13

# FIG. 14

SIGNAL B

SIGNAL F

SIGNAL K

SIGNAL J

SIGNAL Ō

# FIG. 15

FIG. 16

| Category | Citation of document with indication, where appropriate, of relevant passages | Relevant to claim |
|---|---|---|
| X,D | <u>GB - A - 2 000 291</u> (HITACHI) <br><br> + Page 5, lines 52-70; page 7, lines 22-51; fig. 2,9,10,12, 17,18,25 + <br><br> -- | 1-9 |
| A,P | <u>US - A - 4 170 142</u> (ELECTRIC....) <br><br> + Abstract + <br><br> -- | 8 |
| A | JOURNAL OF PHYSICS E: SCIENTIFIC INSTRUMENTS, Vol. 8, November 1975, Bristol, <br><br> B.B. BRENDEN "Acoustical holography", pages 885-894 <br><br> + pages 887,888; fig. 6 + <br><br> ---- | 1 |

**DOCUMENTS CONSIDERED TO BE RELEVANT**

**CLASSIFICATION OF THE APPLICATION (Int. Cl. ³)**

G 01 N 29/00
G 01 N 29/04
G 03 H 3/00

**TECHNICAL FIELDS SEARCHED (Int.Cl. ³)**

G 01 N 29/00
G 03 H 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| VIENNA | 04-08-1980 | BURGHARDT |

EPO Form 1503.1  06.78